# EUROPEAN PATENT APPLICATION

(11) **EP 4 516 107 A1**
(43) Date of publication of application: **05.03.2025**
(21) Application number: 23193769.9
(22) Date of filing: 28.08.2023
(51) Int. Cl.: A21D 2/14, A21D 2/18, A21D 8/04, A23L 3/3508, A23L 3/3526

(54) **CHITOSAN AND ORGANIC ACID HAVING A PKA OF 4 OR MORE, OR A SALT THEREOF IN BAKERY PRODUCTS**

(71) Applicant: Mauri Technology B.V., 4878 AK Etten-Leur (NL)
(72) Inventor: ATASHGAHI, Siavash, 4878 AK Etten-Leur (NL); LATHAM, Philip Ross, 4878 AK Etten-Leur (NL)
(74) Representative: V.O.

(57) **Abstract**

The invention relates to a dough, a pre-mix and a bakery product comprising an organic acid having a pKa of 4 or more, or a salt thereof, and chitosan. The invention further relates to a method of preparing a bakery product comprising providing a dough comprising an organic acid having a pKa of 4 or more and chitosan, shaping the dough and baking the shaped dough to obtain a bakery product.

## Description

The invention relates to a bakery product, a pre-mix, a dough, a natural preservative and a method for preparing said bakery product.

Preservation of bakery products is relevant to prevent spoilage, in particular by spoilage moulds such as *Aspergillus niger* and *Penicillium paneum,* thereby extending mould free shelf life (MFSL).

Currently, chemical preservatives such as calcium propionate (CalPro) are mostly used as preservatives of bakery products.

However, food regulations have set strict requirements on the use of food additives such as chemical preservatives, including maximum amounts of chemical preservatives that may be used in food products such as bakery products. Furthermore, the demands on modern food distribution chains drive the need for longer MFSL in bakery products.
Accordingly, there is a need to find alternative preservatives that can be used to further increase MFSL of bakery products, without requiring to increase the amount of chemical preservatives above the prescribed maximum.

Finding effective (natural) preservatives for bakery products, especially bread, has remained a challenge. This is related to the complex matrix of dough/bread, shear force of mixing, intense heat-treatment during baking, and lack of flavouring compounds to mask the potential sensory impact of the preservatives. Furthermore, the requirement that the preservative should be compatible with yeast (i.e., at least not inhibit or deactivate the yeast) puts a further constraint on preservatives for broad application in bakery products. This means that many preservatives with known antimicrobial impact have been unsuccessful in bakery applications.

The inventors found that chitosan is effective in inhibiting moulds and in particular *P. paneum* in bakery products and is therefore a promising natural preservative for bakery products. Unexpectedly, chitosan was found to enhance the antimicrobial activity of short chain organic acids often used as preservatives in bakery products in a synergistic manner against *A. niger,* another major spoilage mould of bakery products. This advantageously allows to improve the MFSL of bakery products, whilst the concentration of organic acids need not be increased, or may even be reduced.

The invention therefore relates to a dough, a pre-mix and a bakery product comprising an organic acid having a pKa of 4 or more, or a salt thereof and chitosan.

### Summary of the invention

The invention relates to a bakery product comprising an organic acid having a pKa of 4 or more, or a salt thereof, and chitosan.

Said chitosan is preferably present in an amount, based on the total dry weight, of at least 0.5 wt.%, more preferably has one or more of the following properties:
a) a molecular weight (MW) of at least 11 kDa, preferably at least 15 kDa;
b) an MW of at most 285 kDa, more preferably at most 200 kDa, at most 150 kDa, in particular at most 100 kDa;
c) a degree of deacetylation (DDA) of at least 70%.

Said organic acid (in acid form or provided as a salt thereof) is preferably selected from acetic acid, propionic acid, sorbic acid and benzoic acids, more preferably selected from acetic acid and propionic acid. More preferably, said organic acid is provided by fermented wheat flour (FWF), preferably wherein said FWF has been produced by fermenting wheat flour with a bacterium from the genus *Propionibacterium,* preferably *P. freudenreichii.* Preferably, said organic acid or salt thereof is present in an amount, based on the total dry weight, of at least 0.05 wt.% of the bakery product.

The bakery product according to the invention preferably has a pH of at least 5.5, preferably at least 6, as determinable with the method described in Example 1.

The bakery product is usually made from a dough comprising cereal flour. The bakery product according to the invention is preferably selected from breads, such as loaf breads, bagels, buns, rolls, croissants, baguettes, pretzels, brioches, crumpets and flatbreads; dessert cakes, such as pound cakes, sponge cakes, chiffon cakes, genoise cakes, cake muffins, brownies, cheesecakes, and angel cakes; pastries, pies, cookies flour tortillas and pizza's, preferably wherein said bakery product is a bread, more preferably a loaf bread.

The invention further preferably relates to a bakery product, wherein time of appearance (TOA) of *A*. *niger* and/or *P. paneum* is at least 50 h, preferably at least 60 h, more preferably at least 90 h, in particular at least 100 h as determinable with an accelerated shelf-life testing (ASLT) as described in Example 1.

The invention further relates to a clean label natural preservative for preserving a bakery product comprising fermented starch, preferably FWF and chitosan and to a dough or pre-mix for preparing a bakery product comprising an organic acid having a pKa of 4 or more, or a salt thereof and chitosan.

The invention further relates to a method for preparing a bakery product comprising providing a dough comprising an organic acid having a pKa of 4 or more, or a salt thereof and chitosan, shaping the dough and baking the shaped dough to obtain a bakery product, preferably wherein said dough has been prepared by
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough; and/or wherein said chitosan is at least partly coated with a coating material, wherein said coating material is at least substantially solid at dough temperature and wherein said coating material is meltable during baking, preferably wherein said coating comprises rapeseed oil.

The invention further relates to a use of chitosan as an antimicrobial agent against *P. paneum,* preferably in bakery products, and a use of a combination of chitosan and a fermented carbohydrate, preferably fermented starch, more preferably FWF as natural preservative in a bakery product.

### Figures

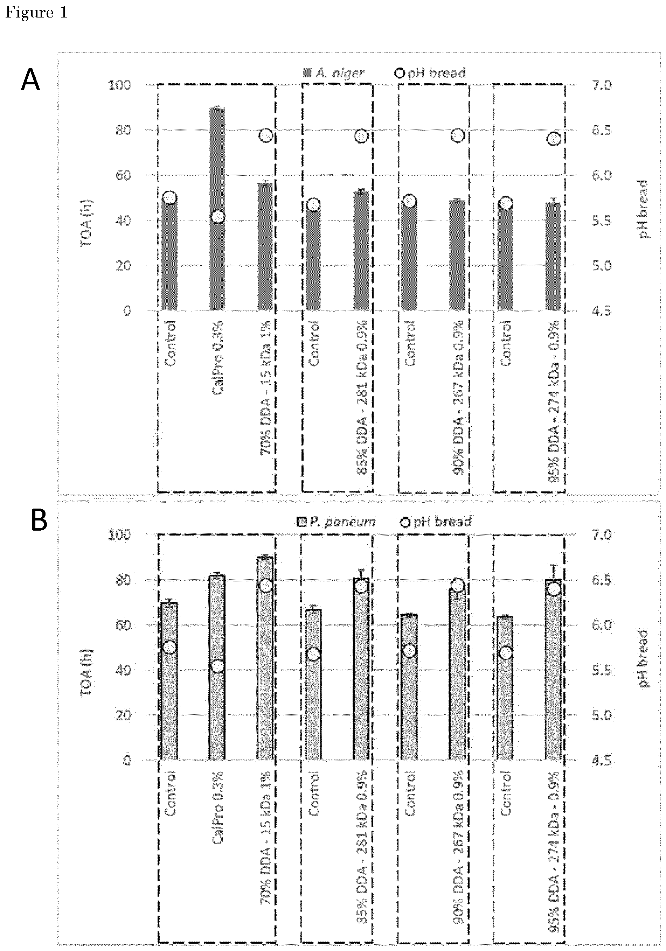

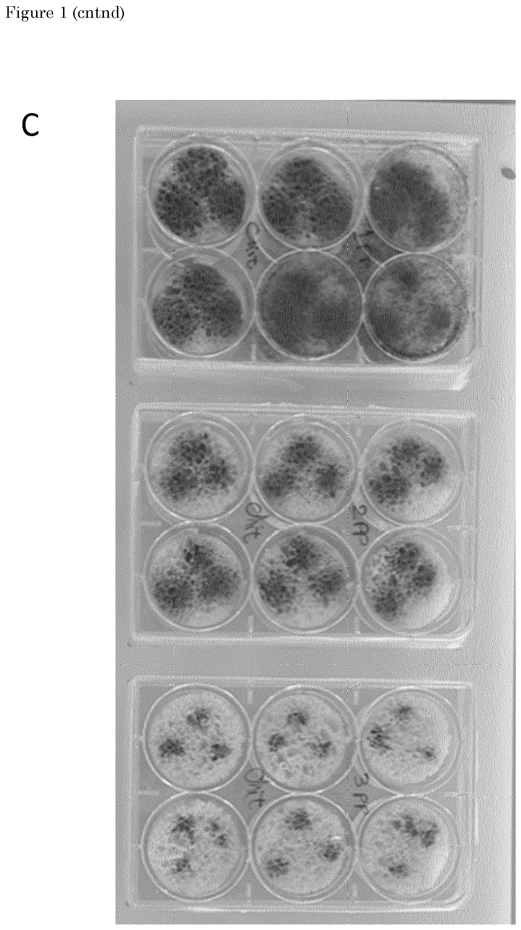

Figure 1. (A) Antimicrobial impact of chitosan samples with different MW and DDA on pH and TOA of *A. niger* (A) and *P. paneum* (B) in breadcrumbs. Low MW chitosan (15 kDa, 70% DDA, KitoZyme) was tested in tin breads with 520g dough and dosed at 1% FWB (third bar), whereas the high MW chitosan samples (267-281 kDa, 85-95% DDA, ChiBio) were tested in bread rolls with 50g dough and dosed at 0.9% FWB (fifth, seventh and ninth bar). Samples from each different test were shown in dashed rectangles for better comparison. Low MW chitosan was shown in the first rectangle from left. (C) *P. paneum* growth pattern after 7 days of inoculation in control breads without preservative (top), breads with CalPro (0.3% FWB, middle) and breads with low MW chitosan (1% FWB, bottom).

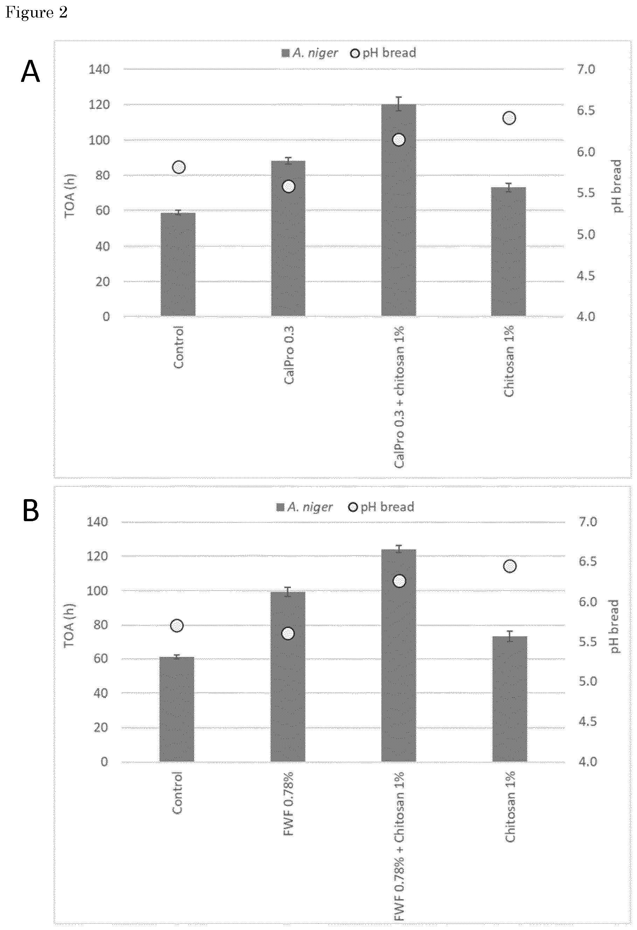

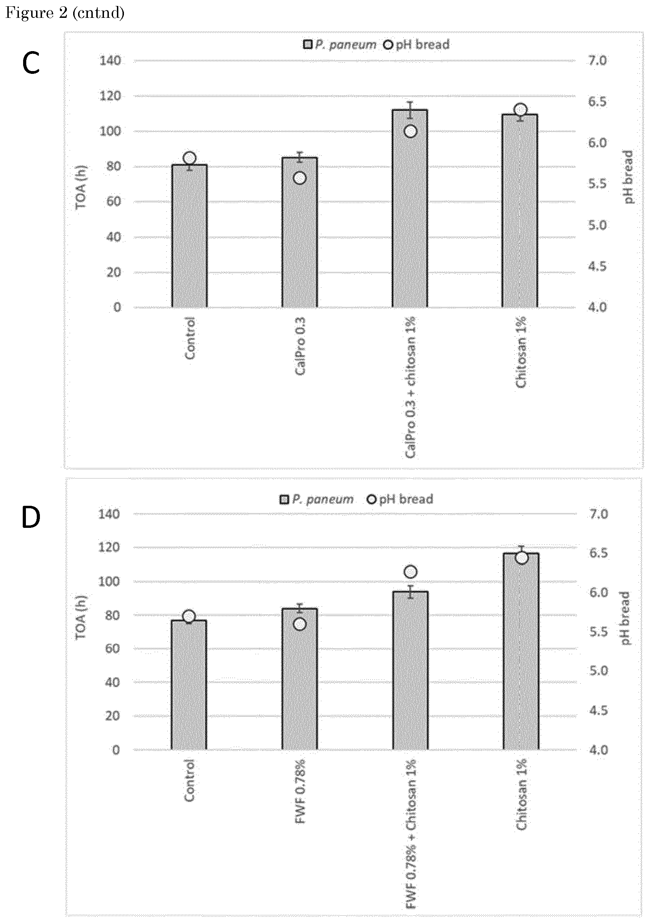

Figure 2. Antimicrobial impact of chitosan (MW 15 kDa, 70% DDA; 1% FWB) in combination with CalPro (0.3% FWB) on pH and TOA of *A. niger* (A) or *P. paneum* (D) in breadcrumbs and of chitosan (MW 15 kDa, 70% DDA; 1% FWB) in combination with FWF (0.78% FWB) on pH and TOA of *A. niger* (B) or *P. paneum* (C) in breadcrumbs.

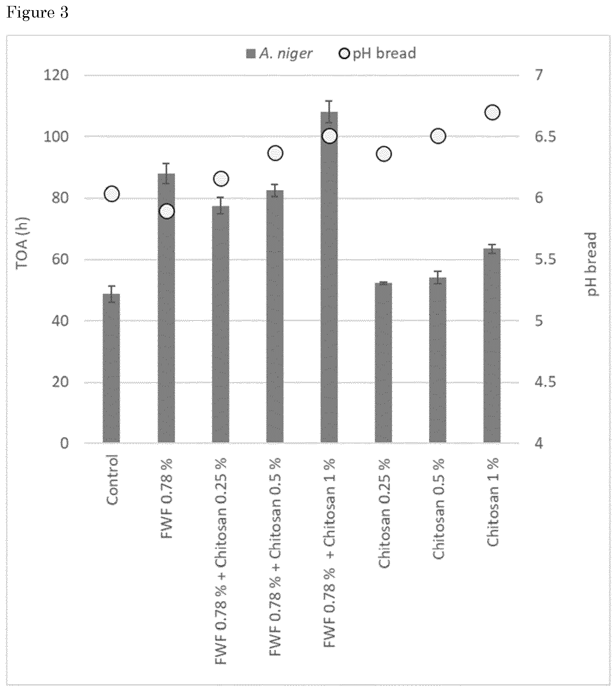

Figure 3. Antimicrobial impact of FWF (0.78% FWB) in combination different dosage of chitosan (MW 15 kDa, 70% DDA; 0.25, 0.5, 1% FWB) on pH and TOA of *A*. *niger* in breadcrumbs.

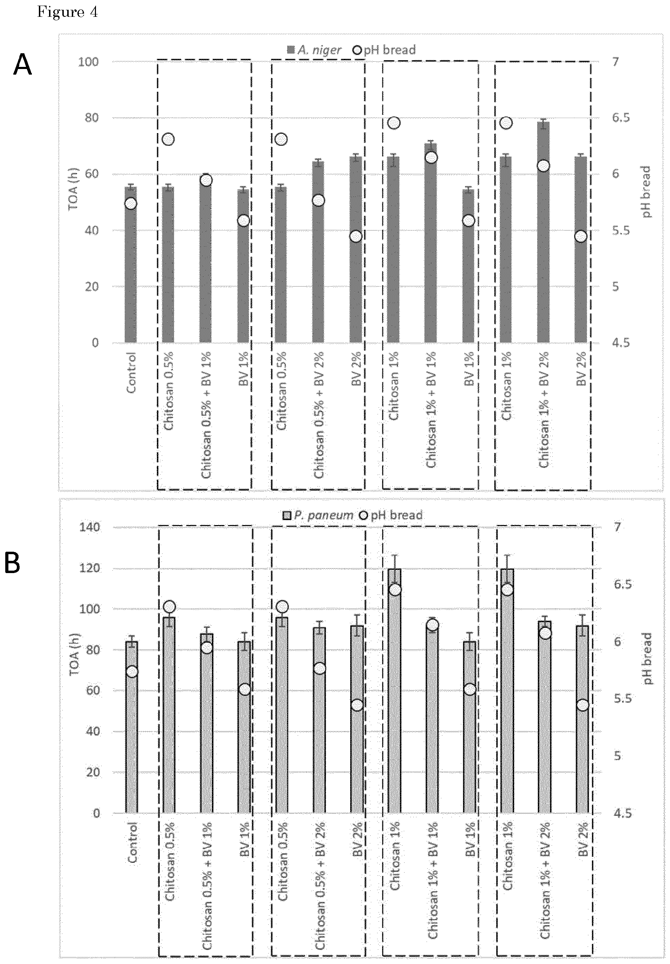

Figure 4. Antimicrobial impact of chitosan (MW 15 kDa, 70% DDA) in combination with buffered vinegar (designated as BV) on pH and TOA of *A. niger* (A) and *P. paneum* (B) in breadcrumbs containing buffered vinegar (1 or 2% FWB) and/or chitosan (0.5 or 1% FWB). Groups of samples were shown in dashed rectangles for better comparison.

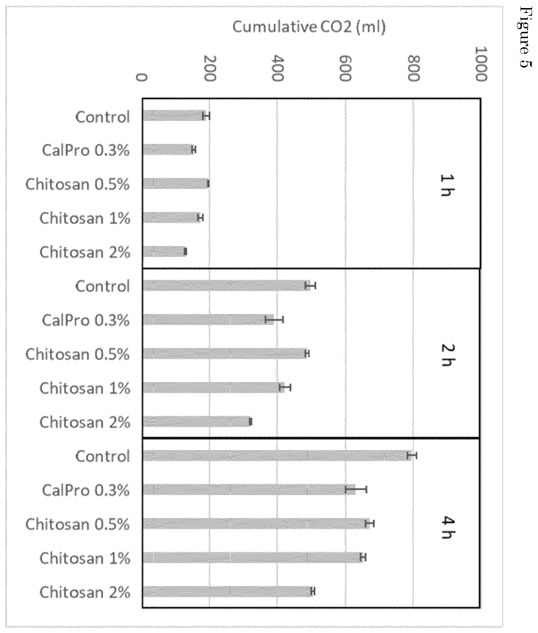

Figure 5. Impact of chitosan (MW 15 kDa, 70% DDA) on baker's yeast fermentation. Cumulative CO₂ production was shown for control breads (no preservative), and bread containing CalPro (0.3% FWB) and chitosan (MW 15 kDa, 70% DDA; dosed at 0.5, 1, and 2 % FWB).

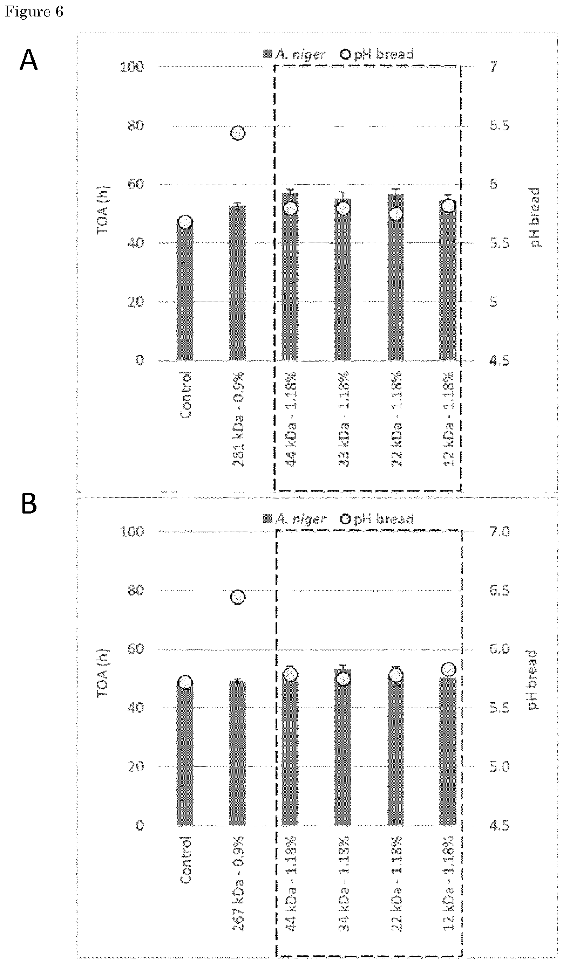

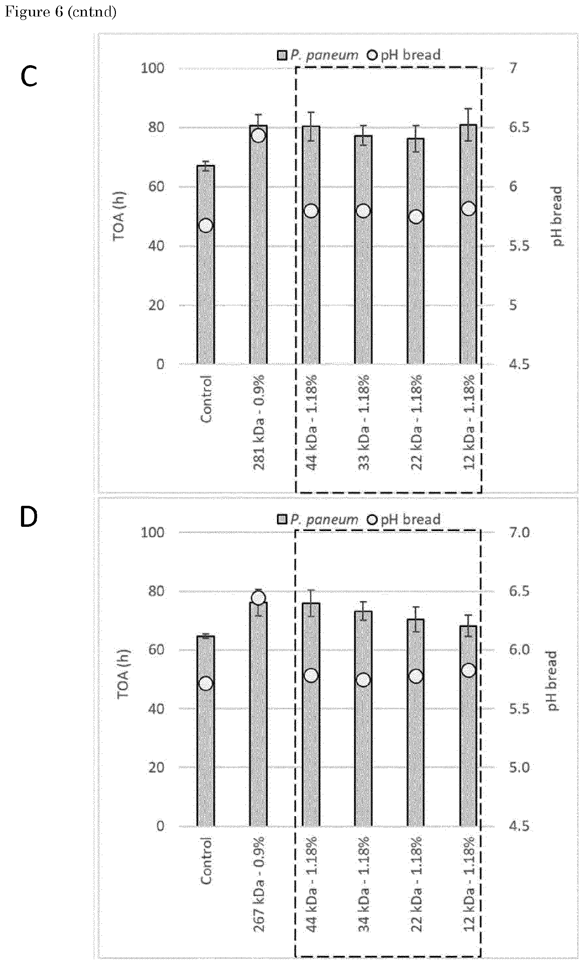

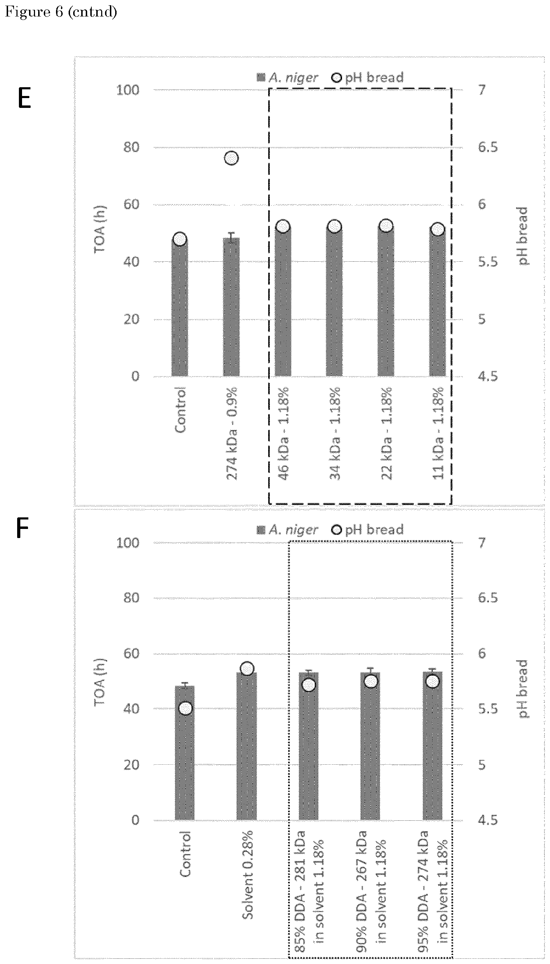

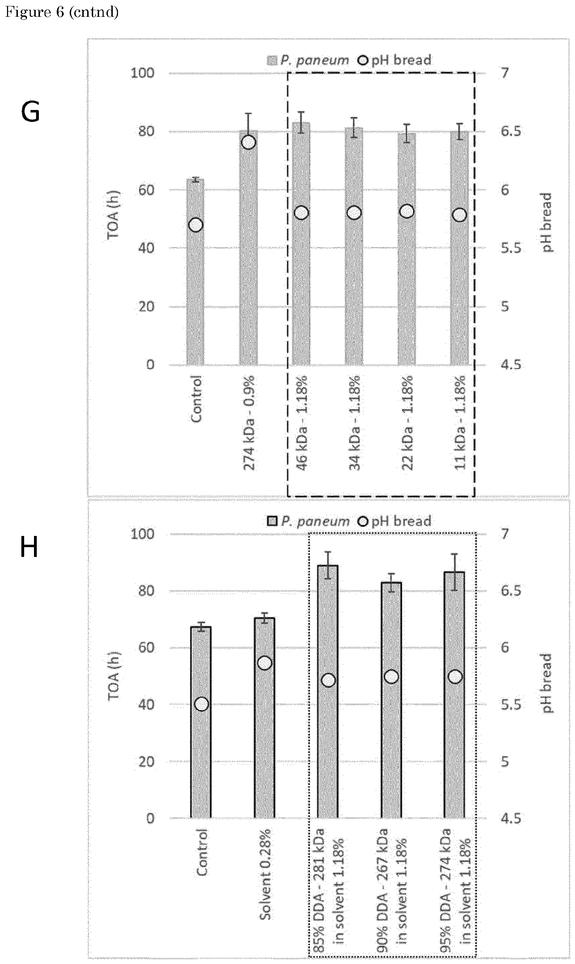

Figure 6. Antimicrobial impact of chitosan hydrolysis and dispersing in solvent on pH and TOA of *A. niger* and *P. paneum* in breadcrumbs. Chitosan samples of 85% DDA (A, C), 90% DDA (B, D), and 95% DDA (E, G) were applied at different degrees of enzymatic hydrolysis. Solvent control and chitosan samples (MW 267-281 DDA, DDA 85%-95%) dispersed in solvent but not hydrolysed were used as controls (F, H). The hydrolysed samples were dosed higher (1.18% FWB) compared to untreated samples (0.9% FBW) to account for the solvent fraction (0.28 FWB). Groups of samples were shown in dashed rectangles for better comparison.

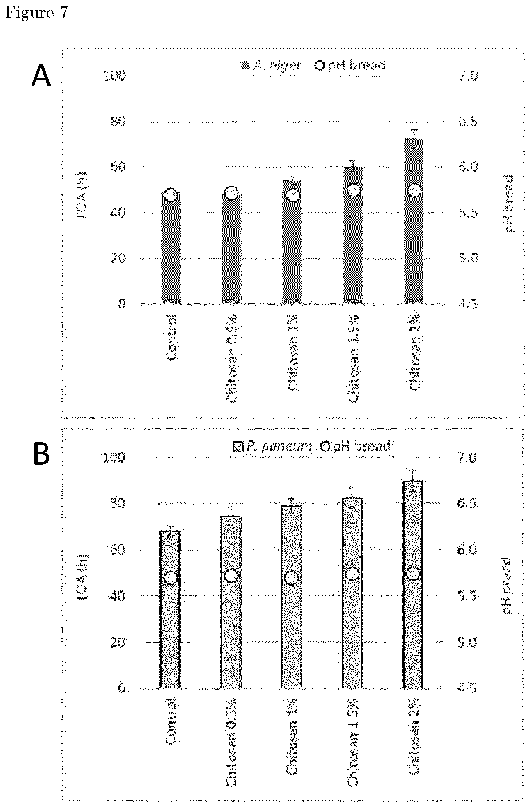

Figure 7. Antimicrobial impact of different dosage of a hydrolysed chitosan sample (90% DDA, 44 kDa) dosed at 0.5 (0.34% chitosan, 0.16% solvent), 1 (0.69% chitosan, 0.31% solvent), 1.5, (1.03 % chitosan, 0.47% solvent) and 2% (1.38 % chitosan, 0.62% solvent) FWB on pH and TOA of *A. niger* (A) and *P. paneum* (B) in breadcrumbs.

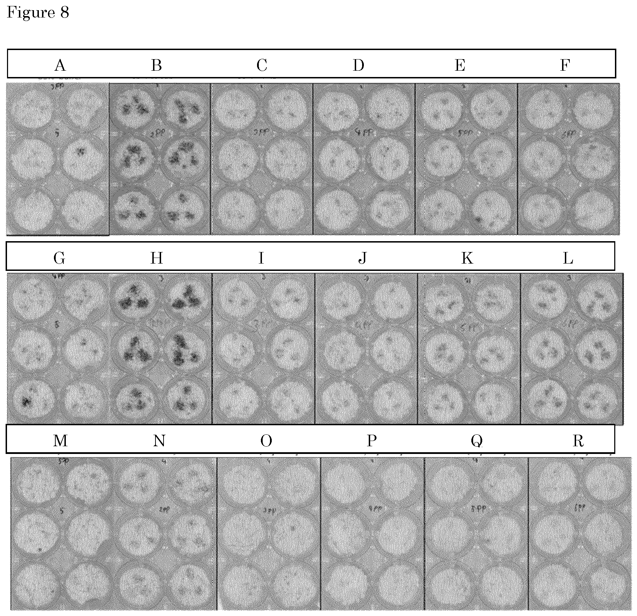

Figure 8. Impact of hydrolysis of different chitosan samples on *P. paneum* growth pattern after 5 days on breadcrumbs. From left to right: original chitosan dispersed but not hydrolysed (A: MW 281 kDa, 85% DDA, G: MW 267 kDa, 90% DDA; M: MW 274 kDa, 95% DDA), solid chitosan not dispersed and not hydrolysed (B: Mw 281 kDa, 85% DDA, H: MW 267 kDa, 90% DDA; N: MW 274 kDa, 95% DDA), followed by dispersed and hydrolysed chitosan after 0.5h (C: MW 44 kDa I: MW 44 kDa; O; MW 46 kDa), 1h (D: MW 33 kDa; J: MW 44 kDa; P: MW 46 kDa), 2h (E: MW 22 kDa; K: MW: 22 kDa; Q: MW: 22 kDa), and 6h (F: MW 12 kDa, L: MW 12 kDa; R: MW: 11 kDa).

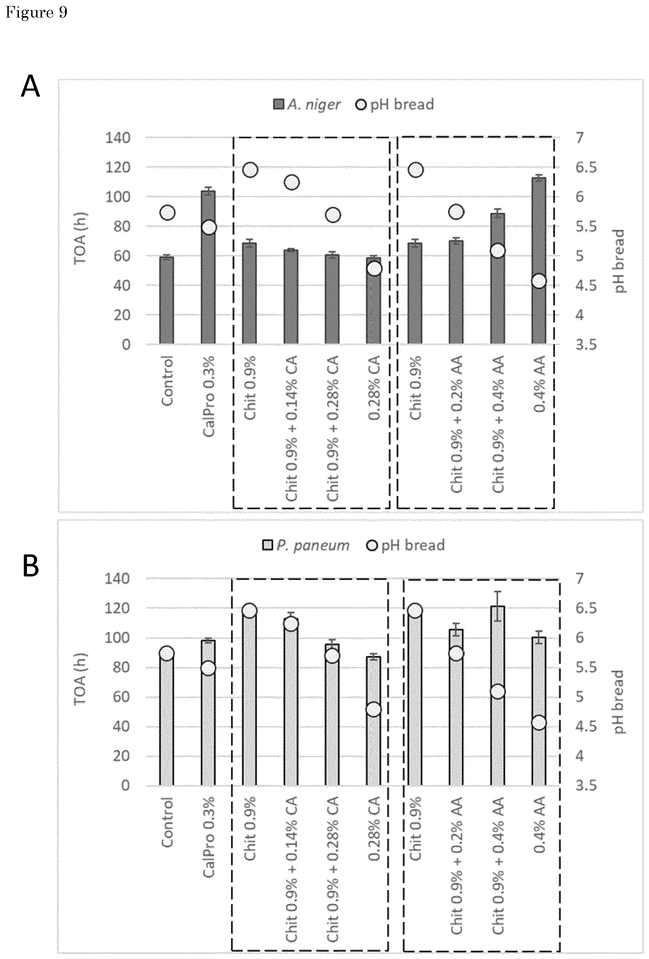

Figure 9. Antimicrobial impact of chitosan (MW 15 kDa, 70% DDA) in presence of weak organic acids on pH and TOA of *A. niger* (A) and *P. paneum* (B) in breadcrumbs. Citric acid (designated as CA, dosed at 0.14 or 0.28% FWB) and acetic acid (designated as AA, dosed at 0.2 or 0.4 % FWB) were added concomitant with chitosan to the mixing bowl before bread baking. CA (0.28% FWB) and AA (0.4 % FWB) were also included without chitosan as controls. Groups of samples were shown in dashed rectangles for better comparison.

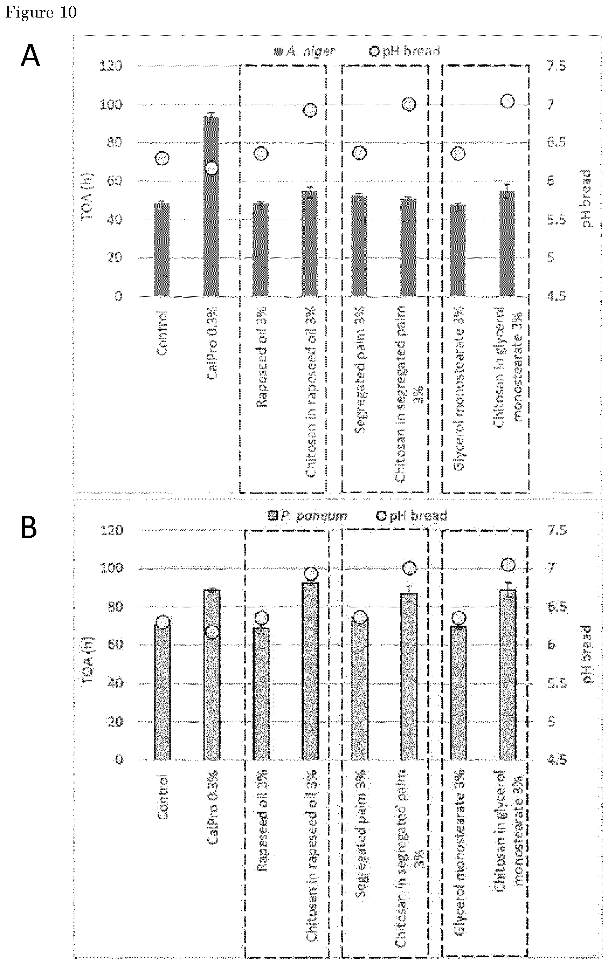

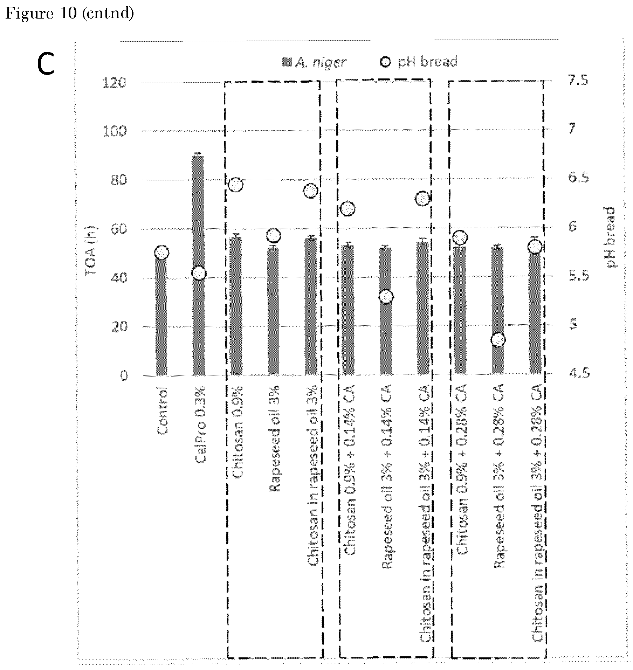

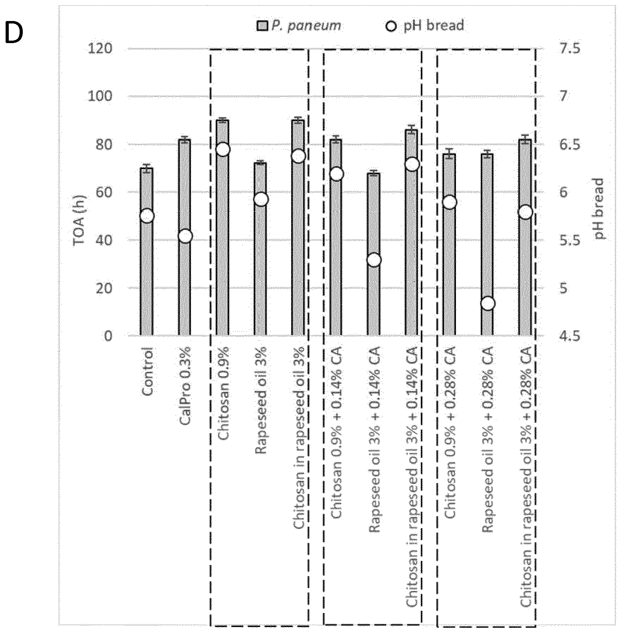

Figure 10: Impact of free and encapsulated chitosan (MW 15 kDa, 70% DDA) in high melting point fats (rapeseed oil, segregated palm, and glycerol monostearate) on pH and TOA of *A. niger* (A) and *P. paneum* (B) in breadcrumbs. The encapsulated chitosan contained 30% chitosan and hence was dosed at 3% FWB to match 0.9% FWB of free chitosan. High melting point fats without chitosan were included to control the impact of carrier material. (C, D) show experiments using *A. niger* (C) and *P. paneum* (D) where free and encapsulated chitosan were also used in combination with citric acid (designated as CA, dosed at 0.14 or 0.28% FWB) as an acidulant. Groups of samples were shown in dashed rectangles for better comparison.

### Detailed description

The term "or" as used herein means "and/or" unless specified otherwise.

The term "a" or "an" as used herein means "at least one" unless specified otherwise.

The term "essential(ly)" is generally used herein to indicate that it has the general character or function of that which is specified. When referring to a quantifiable feature, this term is in particular used to indicate that it is more than 90 %, more in particular more than 95 %, even more in particular more than 98 % of the maximum that feature. The term 'essentially free' is generally used herein to indicate that a substance is not present (below the detection limit achievable with analytical technology as available on the effective filing date) or present in such a low amount that it does not significantly affect the property of the product that is essentially free of said substance or that it is present in such a low amount (trace) that it does not need to be labelled on the packaged product that is essentially free of the substance. In practice, in quantitative terms, a product is usually considered essentially free of a substance, if the content of the substance is 0 - 0.1 wt.%, in particular 0 - 0.01 wt.%, more in particular 0 - 0.005 wt.%, based on total weight of the product in which it is present.

The term "about" in relation to a value generally includes a range around that value as will be understood by the skilled person. In particular, the range is from at least 10 % below to at least 10 % above the value, more specifically from 5 % below to 5 % above the value.

When referring to a "noun" (e.g., a compound, an additive *etc*.) in singular, the plural is meant to be included, unless specified otherwise.

The invention relates to a bakery product, a dough for preparing a bakery product and a pre-mix for preparing a bakery product, comprising an organic acid having a pKa of 4 or more, or a salt thereof and chitosan.

### Chitosan

Chitosan is a linear polysaccharide composed of D-glucosamine (GlcN) and N-acetyl-D-glucosamine (GlcNAc) units, linked together by β-(1,4) glycosidic bonds, wherein the proportion of GlcN units in the polysaccharide exceeds the proportion of GlcNAc units.

Chitosan may be obtained from any suitable source. Preferably, chitosan is obtained from de-N-acetylation of chitin, a closely related linear polysaccharide composed of GlcNAc units, linked together by β-(1,4) glycosidic bonds biopolymer. Chitin may be isolated from the exoskeletons of crustaceans and insects and in the cell walls of most fungi and some algae (Hu and Ganzle, 2018. J. Appl. Microbiol, 126, 1318-1331).

In principle, chitosan may be obtained from any source of chitin, but preferably said chitosan is obtained from chitin present in the cell walls of fungi, more preferably chitin present in the cell walls of *Aspergillus* species, in particular *A. niger.*

Methods to isolate chitin from its biological source have been described in the art. For example, chitin may be obtained by processing crushed shells of crustaceans with hydrogen chloride to achieve demineralization and subsequently boiling in dilute sodium hydroxide to remove proteins (Hu and Ganzle, 2018. J. Appl. Microbiol, 126, 1318-1331). Alternatively, chitin may be extracted from the cell wall from fungi after fermentation, by treating the mycelia under alkaline conditions at elevated temperature, followed by acid treatment and precipitation to obtain chitosan (Huq et al. 2022. J. Bioresources and Bioproducts, 7(2): 85-98).

Chitosan may be prepared from chitin using any suitable method known in the art, such as subjecting chitin to alkaline conditions at elevated temperatures, or by subjecting chitin to enzymatic hydrolysis, using a chitin deacetylase (Hu and Ganzle, 2018. J. Appl. Microbiol, 126, 1318-1331).

Depending on the conditions used to deacetylate chitin, chitosans with varying DDA may be obtained. In a pre-mix, dough or bakery product according to the invention, the DDA of chitosan is preferably at least 50%, more preferably at least 60%, even more preferably at least 70%, at least 80%, at least 90%, at least 95%.

Preferably, the DDA of chitosan is between 51% and 95%, more preferably between about 60% and about 90%, most preferably between about 70% and about 85%.

The DDA is calculated by dividing the number of GlcN units by the total number of GclN + GlcNAcs units and multiplying by 100.

The DDA of chitosan may be determined using any suitable analytical method known in the art, such as 1H NMR, LC-MS, FTIR spectroscopy and FT-Raman spectroscopy for example as described by Rehman et al. 2023. Carbohydrate Polymers, 302:120428.

Without wishing to be bound by any theory, it is believed that antimicrobial properties of chitosan increase with increasing DDA, due to increased positive charge density, facilitating stronger electrostatic interactions with negatively charged components of the cell wall and cytoplasmic membrane of microbes. These interactions are thought to disrupt the integrity of cell envelope, subsequently causing dissipation of membrane potential and leakage of cells, leading to cell death (Figure 1; Hu and Ganzle, 2018. J. Appl. Microbiol, 126, 1318-1331).

In principle said chitosan present in the bakery product, dough or pre-mix according to the invention may have any MW. If chitosan is obtained from deacetylation of chitin, the MW of chitosan may depend on the MW of chitin said chitosan is obtained from. Further, chitosan may optionally be subjected to (enzymatic) hydrolysis to reduce the MW.

Preferably, the number average MW of said chitosan is at least 10 kDa, more preferably at least 12 kDa, in particular at least 15 kDa. Preferably, the number average MW of chitosan is at most 300 kDa, more preferably at most 285 kDa, at most 270 kDa, more preferably at most 200 kDa, at most 150 kDa, such as at most 100 kDa.

Preferably, the number average MW of chitosan is between about 10 kDa and about 300 kDa, more preferably between about 11 kDa and about 280 kDa, between about 12 kDa and about 150 kDa, between about 13 kDa and about 120 kDa, between about 14 kDa and about 100 kDa, between about 15 kDa and about 50 kDa, between about 15 kDa and about 25 kDa.

The number average MW of chitosan may be determined using gel permeation chromatography, for example using the method described in Example 5.

Without wishing to be bound by any theory, it is believed that antimicrobial properties of chitosan increase with increasing MW, due to an increased positive charge density on the chitosan, facilitating stronger electrostatic interactions as described above.

Said chitosan is present in the dough in an antimicrobially effective amount, i.e., an amount sufficient to exert an antimicrobial effect in the bakery product.

The chitosan content of a bakery product, dough or premix according to the invention, based on total dry weight, usually is at least 0.2 wt.%, preferably at least 0.4 wt.%, more preferably at least 0.5 wt.%, at least 0.65 wt.%, at least 0.7 wt.% or at least 0.8 wt.% . Particular good results have been achieved with a chitosan content, based on total dry weight, of at least 0.9 wt.%, more in particular at least about 1 wt.%.

Generally, the chitosan content based on total dry weight, is less than 5 wt.%, preferably about 3 wt.% or less, more preferably about 2 wt.% or less, in particular 1.5 wt. % or less.

Said chitosan is preferably at least partly coated with a coating material, wherein said coating material is at least substantially solid at dough temperature and wherein said coating material is meltable during baking.

Said coating material may in principle be any suitable coating material that is capable of at least partly coating chitosan. Preferably, said chitosan is coated for at least 25% of the surface of chitosan with a suitable coating material, more preferably at least 50%, at least 60%, at least 70%, at least 80%, at least 90% of the total surface of the chitosan. Most preferably, said chitosan is at least substantially encapsulated in a coating material.

Preferably, said at least partly coated chitosan is an at least partly coated chitosan particle. Preferably, said coating comprises at least 10 wt.% of the total at least partly coated chitosan (particle), based on the total weight of the at least partly coated chitosan (particle), more preferably at least 20 wt.%, at least 30 wt.%, at least 40 wt.%, at least 50 wt.%, at least 60 wt.%, most preferably at least 70 wt.% of the total weight of the at least partly coated chitosan (particle).

Preferably, said coating comprises at most 99 wt.% of the total at least partly coated chitosan (particle), based on the total weight of the at least partly coated chitosan (particle), more preferably at most 98 wt.%, at most 97 wt.%, at most 96 wt.%, at most 95 wt.%, at most 90 wt.%, at most 80 wt.%, most preferably at most 75 wt.% of the total weight of the at least partly coated chitosan (particle).

Preferably, said coating comprises between about 10 wt.% and about 99 wt.% of the total at least partly coated chitosan particle, more preferably between about 15 wt.% and about 80 wt.%, between about 20 wt.% and about 50 wt.%, in particular between about 25 wt.% and about 40 wt.% of the total weight of the at least partly coated chitosan (particle).

Said coating is substantially solid during preparation of the dough, e.g., at typical dough temperature and meltable at baking temperature, meaning that during preparation of the dough, said coating material at least substantially holds its shape or form.

Preferred coating materials comprise a fatty substance, such as a monoglyceride, diglyceride, triglyceride, shortening or a wax. Preferably said coating material comprises a triglyceride or a monoglyceride, most preferably a triglyceride.

Preferably said coating material comprises a vegetable oil, more preferably rapeseed oil, palm oil or a fraction thereof, preferably a high-melting fraction thereof. A high-melting fraction may be obtained by fractionating said rapeseed oil into a low-melting (olein) and high-melting (stearin) fraction. Alternatively or additionally, a high-melting fraction may be obtained by hardening the vegetable oil, e.g. by hydrogenolysis.

Preferably said triglyceride is selected from rapeseed oil and palm oil, more preferably from hydrogenated rapeseed oil, hydrogenated palm oil, the high-melting fraction of rapeseed oil and the high-melting fraction of palm oil.

Alternatively or additionally, said fatty substance is a monoglyceride, preferably glycerol monostearate.

Said coating material, preferably said fatty substance, preferably has a melting point of at least 25 °C, more preferably at least 30 °C, at least 35 °C, at least 40 °C, more preferably at least 45 °C, at least 50 °C, at least 55 °C, at least 60 °C, in particular at least 65 °C.

The coating material usually has a melting point of less than 200 °C, more preferably less than 180 °C, less than 150 °C, less than 120 °C, in particular less than 100 °C, such as less than 80 °C. Typical ranges are between about 25 °C and about 200 °C, between about 30 °C and about 150 °C, between about 35 °C and about 100 °C, in particular between about 40 °C and about 80 °C.

Said melting point may be determined using any suitable method known in the art, such as differential scanning calorimetry (DSC) or a capillary method. As the skilled person will appreciate, if the coating material has a melting range, typically the coating material starts melting at a first temperature and is completely molten at a second temperature (higher than the first temperature). The melting then point refers to the peak temperature as determinable with DSC or the mean of the melting range as determinable with capillary method.

Accordingly, the invention further relates to a dough, pre-mix or natural preservative comprising chitosan at least partly coated with a coating material, wherein said coating material is at least substantially solid at dough temperature and wherein said coating material is meltable during baking.

Said chitosan at least partly coated with a coating material preferably comprises chitosan in pre-dispersed, pre-dissolved or pre-suspended form. Accordingly, said chitosan has been obtained by preparing a fluid mixture of chitosan in an aqueous medium and removing a liquid fraction of said aqueous medium to obtain a solid fraction comprising chitosan, as defined herein above.

The inventors further realized that the effect of said coating material could be enhanced when the pH of the bakery product was below 7, more preferably below 6.5, even more preferably below 6. Typically, the pH of the bakery product is between about 4 and about 7, more preferably between about 4.5 and about 6.5, in particular between about 5 and about 6.3.

Accordingly, the invention further relates to a dough, pre-mix or natural preservative comprising chitosan at least partly coated with a coating material, wherein said coating material is at least substantially solid at dough temperature and wherein said coating material is meltable during baking, and wherein the pH of said dough, pre-mix or bakery product is below 7, in particular between about 4 and about 6.5.

This may be achieved by inclusion of an acidulant in the pre-mix, dough or bakery product according to the invention. Preferably, said acidulant has a pKa of below 4, such as citric acid.

Said acidulant is preferably present in an amount of at least 0.1 wt.%, more preferably at least 0.15 wt.%, at least 0.2 wt.% at least 0.25 wt.%, based on the total dry weight. Preferably, said acidulant is present in an amount of at most 1 wt.%, at most 0.8 wt.%, at most 0.6 wt.%, at most 0.5 wt.%, at most 0.4 wt.% based on the total dry weight. Typically, said acidulant is present in an amount of between about 0.1 wt.% and about 1 wt.%, between about 0.15 wt.% and about 0.8 wt.%, between about 0.2 wt.% and about 0.6 wt.%, between about 0.25 wt.% and about 0.4 wt.%, based on the total dry weight.

The inventors surprisingly realized that chitosan prolonged MFSL of a bakery product compared to control, i.e., a bakery product lacking chitosan but which is otherwise the same. This was unexpected, due to the complex matrix of bakery products and the presence of food ingredients such as NaCl and proteins, which may shield positive charges of chitosan, thereby decreasing its activity (Hu and Gänzle, 2018. J. Appl. Microbiol, 126, 1318-1331).

The inventors further realized that chitosan (1% FWB) was particularly effective against *P. paneum.* Where TOA of *A. niger* of a bakery product comprising chitosan was prolonged with at least 13%, compared to control without preservative in an ASLT, the TOA *of P. paneum* was prolonged with at least 28% compared to control (see Figure 1). Notably, chitosan was able to prolong TOA of *P*. *paneum* by an additional 11% compared to CalPro(0.3% FWB).

Accordingly, the invention further relates to the use of chitosan as an antimicrobial agent against *P. paneum.*

### Organic acid having a pKa of 4 or more, or a salt thereof

Said organic acid having a pKa of 4 or more, or salt thereof may in principle be any organic acid having a pKa of 4 or more, or salt thereof, that exhibits antimicrobial activity against *A. niger* and/or *P. paneum* in bakery products.

Preferably, said organic acid has a pKa of 4 or more, more preferably 4.2 or more, even more preferably 4.5 or more, in particular 4.7 or more. Preferably said pKa is at most 10, more preferably at most 9, at most 8, at most 7, in particular at most 6.5.

Preferably, said organic acid has a pKa in the range of about 4 to about 10, more preferably in the range of between about 4.2 and about 9, between about 4.5 and about 8, between about 4.7 and about 6.5.

The pKa preferably relates to the pKa of the carboxylic acid group of said organic acid in an aqueous medium, in particular water.

The pKa of common organic acids have typically been described (see e.g., Perrin, D. D., Dempsey, B., and Serjeant, E. P., pKa Prediction for Organic Acids and Bases, Chapman and Hall, London, 1981). For example, the pKa of acetic acid is about 4.74, the pKa of propionic acid is about 4.87, the pKa of sorbic acid is about 4.76, the pKa of benzoic acid is about 4.19, the pKa of citric acid is about 3.13 and the pKa of lactic acid is about 3.85.

Said pKa may also experimentally determined using methods known in the art, for example by preparing a titration curve using a strong base and a (color) indicator.

Such organic acids have been found to be particularly suitable as preservatives for bakery products.

An organic acid as used herein refers to a small organic molecule comprising a carboxylic acid group. Said organic acid may be typically described with general molecular formula CₓH_{y}C₂H. Herein, x may be any integer number ranging from 2 to 8, in particular ranging from 2 to 6. Preferably x is selected from 2, 3, 4, 5 or 6. Herein, y may be any integer number ranging from 3 to 15, preferably ranging from 3 to 11, provided the organic acid is a chemically stable molecule.

Preferably, said organic acid is a saturated organic acid molecule. Saturated organic acid molecules are typically represented by molecular formula CₓH₂ₓ₋₁O₂H, wherein x ranges from 2 to 8, preferably from 2 to 6, in particular wherein x is 2 or 3.

In a particularly preferred embodiment, said organic acid is selected from acetic acid, propionic acid, sorbic acid and benzoic acid.

Said organic acid may be provided in the dough or pre-mix for preparing a bakery product according to the invention in protonated form, or as a suitable salt thereof. With the term suitable salt is meant a salt that is suitable for incorporation in food products, i.e., it should be edible and not substantially toxic to humans at the applied amounts.

As the skilled person will appreciate, the organic acids having a pKa of 4 or more and their salts are present in a chemical equilibrium in the dough and bakery product. Accordingly, if a salt of an organic acid is provided into the dough or premix, typically the protonated organic acid is formed *in situ* in the dough, at common dough pH (typically between about 5.5 and about 6.5). Accordingly, typically a mixture of said organic acid and its salt is present in the dough, pre-mix and bakery product according to the invention.

Preferably, a salt of said organic acid is provided in the dough or pre-mix for preparing a bakery product according to the invention. This is advantageous, because the salts of said organic acids are typically solid at room temperature, which facilitates application and handling thereof.

Preferably, said salt is a sodium salt, a potassium salt, an ammonium salt or a calcium salt of said organic acid, more preferably a sodium salt or a calcium salt. In particular, a salt of an organic acid selected from calcium propionate, sodium propionate, sodium acetate or calcium acetate is provided in the dough.

Salts of organic acids are commercially available as food preservative. For example, calcium propionate (E282), calcium acetate (E263), potassium sorbate (E202) and sodium benzoate (E211) are all commercially available food preservatives.

Preferably said organic acid having a pKa of 4 or more, or a salt thereof, is usually present in an amount in said bakery product, dough or pre-mix according to the invention, based on the total dry weight, of at least 0.01 wt.%, preferably of at least 0.05 wt.%, even more preferably of at least 0.1 wt.%, at least 0.15 wt.%, at least 0.2 wt.%, at least 0.25 wt.%, in particular of at least about 0.3 wt.%. Typically, said organic acid is present in an amount, based on the total dry weight, of at most 1 wt.%, preferably at most 0.9 wt.%, more preferably at most 0.8 wt.%, at most 0.7 wt.%, at most 0.6 wt.%, at most 0.5 wt.%, in particular at most 0.4 wt.%.

Preferably, said organic acid having a pKa of 4 or more, or a salt thereof, is present in an amount of between about 0.01 wt.% and about 1 wt.%, more preferably between about 0.05 wt.% and about 0.8 wt.%, in particular between about 0.1 and about 0.5 wt.%, in particular about 0.3 wt.%, based on the total dry weight.

Said organic acid having a pKa of 4 or more, or salt thereof, is preferably present in the dough, pre-mix or bakery product according to the invention in the form of a natural preservative, such as a fermented carbohydrate.

Said carbohydrate may in principle be any carbohydrate that is fermentable to produce organic acids, preferably which is fermentable by a bacterium from the genus Propionibacterium. Examples include starch, dextrose, glucose, sucrose and glycerol. Accordingly, said dough, pre-mix or bakery product according to the invention preferably comprises a fermented starch, fermented dextrose, fermented glucose, fermented sucrose and/or fermented glycerol. Such bakery products are advantageously suitable as clean-label product.

Accordingly, the invention preferably relates to a pre-mix, dough, bakery product comprising a fermented carbohydrate, preferably fermented starch, more preferably fermented wheat flour, and chitosan.

Said fermented carbohydrate, preferably fermented starch is preferably a fermented starch that has been fermented with a bacterium from the genus *Propionibacterium,* more preferably *P. freudenreichii* and/or *P. acidipropionici.*

Said starch may be any type of starch suitable for application in bakery products, preferably said starch comprises wheat starch, corn starch, cassava starch, pea starch or rice starch, more preferably native wheat starch, native corn starch, native cassava starch, native pea starch, native rice starch or a combination thereof.

Preferably, said starch is provided by flour, more preferably wheat flour.

Without wishing to be bound by any theory, it is believed that when a carbohydrate such as starch is subjected to fermentation with a bacterium from the genus *Propionibacterium,* in particular *P. freudenreichii,* short chain organic acids, such as propionic acid, are formed which exert an anti-microbial activity as substantiated herein above.

Fermented wheat flours are commercially available, such as Upgrade WS from Kerry, or can be prepared using a method known per se, e.g., by subjecting wheat flour to fermentation with a *Propionibacterium,* in particular *P*. *freudenreichii,* for example as described by Ranaei et al. 2020 Food Technol Biotechol. 58(2):115-127.

Substrates for preparing fermented wheat flour may be any type of wheat flour including whole wheat flour, all-purpose flour and durum flour.

Preferably said fermented carbohydrate, preferably fermented starch, more preferably FWF is present in an amount, based on the total weight of flour, of at least 0.5 wt.%, more preferably at least 0.6 wt.%, even more preferably at least 0.7 wt.%, in particular at least 0.78 wt.%. Typically, fermented starch, preferably fermented wheat flour is present in an amount, based on the total dry weight, of at most 5 wt.%, preferably at most 4 wt.%, more preferably at most 3 wt.%, in particular at most 2 wt.%.

Preferably, said fermented carbohydrate, more preferably fermented starch, even more preferably fermented wheat flour is present in an amount of between about 0.5 wt.% and about 5 wt.%, more preferably between about 0.6 wt.% and about 3 wt.%, in particular between about 0.7 and about 1 wt.%, based on the total dry weight.

The inventors surprisingly realized that with a combination of an organic acid having a pKa of 4 or more, or a salt thereof and chitosan, the MFSL of a bakery product may be increased by up to 29.9%, compared to control. Unexpectedly, the inventors found that addition of a relatively low amount of chitosan (i.e., <0.5 wt.% FWB) in combination with 0.78 wt.% of FWF had an adverse effect on the TOA of *A. niger* compared to 0.78 wt.% of FWF alone (see Figure 3).

Surprisingly, a combination of CalPro (0.3% FWB) or FWF (0.78% FWB) with >0.5 wt.% of chitosan markedly improved TOA of *A. niger* with more than 102-104% compared to control without preservative and respectively more than 24% and more than 35% compared to FWF (0.78% FWB) or 0.3 wt.% CalPro (0.3% FWB) alone (Figure 2 A-B). This increase in TOA (102-104%) is more than the total of individual effects of FWF (+ approximately 62%) or CalPro (+ approximately 50%) and chitosan (+ approximately 20-24%) compared to control without preservative (Figure 2 A-B). Thus, these results indicate that both CalPro and FWF in combination with chitosan act synergistically together against *A. niger.*

A synergistic effect between an organic acid having a pKa of 4 or more, or a salt thereof, and chitosan is advantageous, because it allows to improve MFSL by increasing TOA of moulds, in particular *A. niger* without needing to use higher amounts of the organic acid having a pKa of 4 or more, or a salt thereof.

Accordingly, in a particularly preferred embodiment the invention relates to bakery product, a dough for preparing a bakery product respectively a pre-mix for preparing a bakery product comprising at least 0.1 wt.% of CalPro, in particular at least 0.3 wt.% of FWF and at least 0.5 wt.% of chitosan, preferably at least 0.7 wt.% of chitosan, in particular at least 1 wt.% of chitosan.

In another particularly preferred embodiment, the invention relates to bakery product, a dough for preparing a bakery product, a pre-mix for preparing a bakery product and a clean-label natural preservative for preparing a bakery product comprising at least 0.5 wt.% of FWF, in particular at least 0.7 wt.% of FWF and at least 0.5 wt.% of chitosan, preferably at least 0.7 wt.% of chitosan, in particular at least 1 wt.% of chitosan.

The pH of a dough and a bakery product according to the invention depends on the content of chitosan and said organic acid having a pKa of 4 or more, or a salt thereof and optionally other dough ingredients. A control bakery product (free of preservatives) typically has a slightly acidic pH, in particular a pH of around 6. As a rule of thumb, the presence of chitosan normally slightly increases the pH of a dough or bakery product compared to control, whereas the presence of said organic acid having a pKa of 4 or more, or a salt thereof, normally reduces the pH compared to control, due to the presence of organic acids therein.

The pH of a bakery product, pre-mix or a dough according to the invention is typically between about 5.5 and about 7, more in particular between about 5.7 and about 6.8, even more in particular between about 6 and about 6.5. Said pH is preferably at most 7, more preferably at most 6.5, at most 6, at most 5.7, in particular at most 5.5.

The pH is determinable by suspending a fixed amount of said dough or bakery product in water and measuring the pH of the suspension using a calibrated pH meter, for example as described in Example 1.

Advantageously, the pH of a bakery product should be slightly acidic, as under these conditions the active antimicrobial principles in the bakery product are most effective.

An advantage of using chitosan and FWF to reduce spoilage of a bakery product is that it allows to reduce the content of chemical preservatives in bakery products, preferably eliminates the presence of chemical preservatives.

Accordingly, the invention preferably relates to (a method for preparing) a dough, a pre-mix or a bakery product that comprises at most 0.1 wt.% of a chemical preservative, preferably comprises at most 0.05 wt.% of a chemical preservative, more preferably at most 0.01 wt.% of a chemical preservative, in particular is essentially free of a chemical preservative, based on the total dry weight.

A bakery product that is essentially free of a chemical preservative is preferably a clean label bakery product. "Clean label" is a term used in the art to refer to a food product that is essentially free of chemical additives, such as a chemical preservative.

Accordingly, the dough, pre-mix and bakery product according to the invention is preferably essentially free of chemical additives.

### Further dough ingredients

Typical dough ingredients used for the preparation of a dough, pre-mix or bakery product according to the invention include starch (preferably provided by flour), water, fat and salt.

Preferably said dough, pre-mix or bakery product comprises starch, preferably a cereal starch. Preferably said cereal starch is selected from wheat starch, corn starch and rice starch.

Alternatively or additionally, said dough or bakery product comprises flour, preferably selected from wheat flour, spelt flour, corn flour, oat flour, barley flour, rye flour, sorghum flour, buckwheat flour, millet flour, triticale flour, amaranth flour, teff flour, rice flour, quinoa flour, tapioca flour, potato flour, chickpea flour, coconut flour, almond flour, cassava flour, arrowroot flour, pea flour and combinations thereof.

Preferably, said bakery product comprises wheat flour. Wheat flour typically comprises, based on the total weight of the wheat flour, about 70-75 wt.% of starch, about 14 wt.% of water and about 8-11 wt.% of protein.

As the skilled person will appreciate, said starch and/or said flour is distinct from said FWF as defined herein. Thus, said flour and/or said starch typically serves to provide structure to said bakery product. In principle, said flour and/or said starch does not have substantial antimicrobial activity.

Accordingly, said flour has preferably not been fermented, more preferably has not been fermented by *Propionibacterium,* in particular has not been fermented by *P. freudenreichii* and/or *P. acidipropionici.*

Most preferably, said dough, pre-mix or bakery product comprises wheat flour, spelt flour, rye flour, corn flour, rice flour or a combination thereof.

Said dough or bakery product further preferably comprises a fat. Said fat may be a solid fat such as shortening, butter or margarine, or may be a liquid fat (vegetable oil) which is typically liquid at a temperature of about 25 °C and atmospheric pressure. Vegetable oils typically comprise a lower content of saturated fatty acids, which is considered advantageous from a health perspective.

Preferably, said dough or bakery product comprises a vegetable oil, preferably selected from sunflower oil, olive oil, walnut oil, canola oil, rapeseed oil, peanut oil, coconut oil, sesame oil, grapeseed oil and avocado oil.

The dough, pre-mix or bakery product may further comprise one or more leavening agent(s), to provide leavening of the bakery product, giving a more voluminous product. Preferably, the leavening agent is a yeast, more preferably baker's yeast.

Baking powder and leavening acids such as monocalcium phosphate (MCP), sodium aluminium phosphate (SALP) and sodium aluminium sulphate (SAS), sodium acid pyrophosphate (SAPP) may also be used.

The dough or bakery product may further comprise a sweetener such as sugar, aspartame, stevia or honey. A sweetener is typically used to prepare a sweet bakery product such as a dessert cake, pastry, pie or cookies.

The dough or bakery product may further comprise water. Said water may be provided as such, e.g., using tap water or mineral water, or may be provided in another source, e.g., in the form of (plant-based) milk or the like.

The dough, pre-mix or bakery product may optionally comprise one or more other typical dough ingredients, e.g., emulsifiers, such as lecithin; thickening agents, e.g., gums; salt; ascorbic acid, ammonium sulphate, flavouring agents and the like. If the dough, pre-mix or bakery comprises one or more of these optional ingredients, they are preferably natural ingredients, such as e.g., sunflower or soybean lecithin or natural flavouring agents.

Said dough, pre-mix or bakery product may further optionally comprise an acidulant. Said acidulant is preferably distinct from said organic acid having a pKa of 4 or more. Preferably, said acidulant has a pKa of less than 4, preferably less than 3.8, less than 3.5, such as less than 3.2. Preferably said acidulant is selected from citric acid and lactic acid, more preferably citric acid.

The amount of dough ingredients present in the dough, pre-mix or bakery product depends on the type of bakery product to be prepared. The skilled person is able to select the amount of dough ingredients depending on common general knowledge in baking and the information provided herein.

### Methods of preparing a pre-mix, dough, and bakery product according to the invention

The invention further relates to a method for preparing a pre-mix or a dough, comprising mixing chitosan and an organic acid having a pKa of 4 or more, or a salt thereof, to obtain a pre-mix or a dough.

The pre-mix and dough according to the invention may be prepared in a manner known per se, with the proviso that the chitosan and organic acid having a pKa of 4 or more, or a salt thereof, are added therein.

With a pre-mix, as used herein, is meant a mixture of the dry dough ingredients of the dough. A pre-mix can be used to prepare a dough, i.e., by mixing the pre-mix with the liquid part of the dough, typically water and/or oil.

Preferably, said dough is prepared by mixing chitosan and said organic acid having a pKa of 4 or more, or a salt thereof, with one or more other typical dough ingredients to form a dough having chitosan and said organic acid having a pKa of 4 or more, or a salt thereof, distributed therein, preferably wherein said organic acid and said chitosan are homogeneously distributed throughout the dough. This means that the concentration of the compound in two randomly taken samples of the dough or bakery product, e.g., one sample taken from the core of the dough or bakery product, i.e., at least one centimetre away from the surface or rim of the dough or bakery product, and one sample taken from the surface of the dough or bakery product, is essentially the same.

The inventors realized that the anti-microbial activity of chitosan may be markedly enhanced when chitosan was subjected to a pre-treatment.
Accordingly, the invention relates to a method for preparing a bakery product, wherein said dough has been prepared by
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough.
A "fluid mixture" is used herein for liquids and mixtures of liquids and at least one other phase, such as suspensions, that flow without applying external pressure (pressure other than gravity).

Preferably, said fluid mixture is a solution, a dispersion or a suspension, more preferably a solution or a dispersion.

A solution is typically understood to mean a form of a fluid mixture that is least substantially clear, meaning there are no particles, haze or turbidity visible to the naked eye.

Herein, a dispersion may be understood as a form of a fluid mixture that comprises a homogeneous mixture of chitosan in an aqueous medium. A dispersion is typically stable for a substantial amount of time, i.e., meaning that the dispersed particles are not essentially readily settled in the aqueous medium. Typically, a dispersion is stable for at least 30 minutes, more preferably at least 1 hour, even more preferably at least 2 hours, at least 4 hours, at least 6 hours, at least 12 hours, at least 24 hours, at least 36 hours, at least 48 hours, at least 60 hours, such as at least 72 hours.

Stability of a dispersion may be determined by eye, e.g. the observation of settling of particles in a lower part of the dispersion typically indicates that chitosan particles are no longer dispersed in an aqueous medium.

Typically, a suspension is understood as a form of a fluid mixture of solid particles in a liquid medium that usually phase-separate over time. Usually, a suspension is less stable than a dispersion.

Said fluid mixture may be prepared using a method known per se, e.g. by mixing an aqueous medium with chitosan.

Said aqueous medium may be water, a salt solution, an acidic solution or a buffer solution.

Said aqueous medium should be food-grade, i.e., suitable for human consumption. Examples of suitable aqueous media include an acetate solution, a citrate solution, lactate solution and a phosphate solution. Preferably, said suitable aqueous media comprises a (sodium) acetate solution.

Preferably, said aqueous medium, is an aqueous medium obtained from a natural source, such as fruit juice, in particular juice of a citrus fruit, e.g., lemon juice or lime juice or natural vinegar. Such aqueous media are advantageously suitable for preparing a clean-label bakery product.

Said fruit juice may be pressed from the corresponding fruit and used directly to prepare an aqueous solution comprising chitosan, or may first be processed, e.g., to remove one or more components from the fruit juice. Typically, the fruit juice is at least subjected to a step of filtration to remove solids. Optionally, said fruit juice is subjected to one or more substantial purification, e.g., to separate acidic components from other components present in the juice. For example, lemon juice may be purified to obtain an aqueous solution of citric acid, malic acid or a combination thereof.

Preferably, said fluid mixture (comprising chitosan) has a pH of at least 4, more preferably at least 4.5, in particular at least 5. Preferably, the solution has a pH of at most 7, more preferably at most 6.5, even more preferably at most 6, in particular at most 5.5.

Said fluid mixture comprising chitosan preferably has a pH in the range of between about 4 and about 7, more preferably a pH in the range of between about 4.5 and about 6.5, in particular between about 5 and about 6.

Preferably, the pH of the dough is at least 4, more preferably at least 4.5, in particular at least 5. Preferably, the solution has a pH of at most 7, more preferably at most 6.5, even more preferably at most 6, in particular at most 5.5. More preferably, the dough has a pH in the range of between about 4 and about 7, more preferably a pH in the range of between about 4.5 and about 6.5, in particular between about 5 and about 6.

The pH of said fluid mixture can be determined using a calibrated pH meter, such as a pH meter from Mettler Toledo. The pH of the dough may be determined by suspending a fixed amount of said dough in water and measuring the pH of the suspension using a calibrated pH meter, for example as described in Example 1.

Said liquid fraction may be removed using any suitable method known in the art. Preferably, said liquid fraction is removed by means of freeze-drying.

Mixing may be achieved using any suitable method known in the art, e.g., by kneading of the dough using a mechanical mixer or by hand. The dough ingredients may be added in any particular order. For example, all dough ingredients may be added at once, or first a part of the dough ingredients may be mixed followed by adding the rest of the dough ingredients.

The invention further relates to a method for preparing a bakery product, comprising providing a dough comprising an organic acid having a pKa of 4 or more, or a salt thereof, and chitosan, shaping the dough and baking the shaped dough to obtain a bakery product.

Herein, the dough is as defined herein above.

In a method for preparing a bakery product according to the invention, the dough may be shaped and baked to obtain a bakery product. Any suitable method known in the art can be used to shape and bake the bakery product, depending on the type of bakery product and type of dough ingredients used.

Suitable methods for shaping the dough typically depend on the consistency, e.g., the firmness and viscosity of the dough. For a firm dough, typically the dough may be shaped mechanically or manually and can subsequently be baked, without requiring a means to hold its shape. For example, for croissants, pizza's and the like, typically no mould is necessarily required.

More fluid doughs, also referred to sometimes in the art as "batter" typically require a firm means, such as a firm mould to keep the shape. Also, if a specific shape is required, a mould may be required to hold the shape. Some cakes, such as pound cake, and pies may require the use of a means, such as a mould to keep the shape prior to or during baking.

Suitable baking conditions may be selected to bake the bakery product according to the invention. The bakery product may be heated by dry heat, e.g., such as in an oven or on a hotplate, by steam, or by hot oil, such as in a pan (panfried) or deep fryer. However, the bakery product is preferably heated using dry heat, preferably in an oven.

The skilled person is capable of selecting appropriate shaping and baking conditions depending on common general knowledge and the information provided herein.

In principle, the combination of chitosan and organic acid having a pKa of 4 or more, or a salt thereof, have the ability to reduce spoilage in essentially all types of bakery products. Preferably, the bakery product is selected from from breads, such as loaf breads, bagels, buns, rolls, croissants, baguettes, pretzels, brioches, crumpets and flatbreads; dessert cakes, such as pound cakes, sponge cakes, chiffon cakes, genoise cakes, cake muffins, brownies, cheesecakes, and angel cakes; pastries, pies, cookies, flour tortillas and pizza's, preferably wherein said bakery product is a bread, more preferably a loaf bread.

In accordance with the invention, chitosan and organic acid having a pKa of 4 or more, or a salt thereof are capable of preventing spoilage of said bakery product.

Key micro-organisms known to be involved in spoiling of bakery products are *A. niger* and *P. paneum.* Most micro-organisms involved in spoiling of bakery products are fungi, but yeasts and bacteria can also be involved, although typically to a lesser extent.

Accordingly, the invention relates to a (method for preserving a) bakery product, which bakery product has a prolonged MFSL compared to a control bakery product.

Said control bakery product is a bakery product of the same type, e.g., if the MFSL of a loaf bread is determined, then the control bakery product is also a loaf bread.

The control bakery product is prepared from the same dough, with the proviso that chitosan and said organic acid having a pKa of 4 or more, or a salt thereof, are absent.

A bakery product according to the invention preferably has a MFSL of at least 50 hours, preferably at least 60 h, more preferably at least 90 h, more preferably at least 100 h as determinable with an ASLT as described in Example 1. Advantageously, challenge test based on ASLT has increased sensitivity, reproducibility and statistical power. In an ASLT, a test sample of a bakery product to be assessed is inoculated with a pre-defined number of cells/spores of a micro-organism known to be involved in spoilage, typically with spores of *A. niger* or spores *of P. paneum.* To improve accuracy, typically freeze-dried spores of one batch of a fungus are used in a test, to make sure that physiological state, viability and number of spores are constant, and the results can be compared.

The MFSL of bakery products is assessed by monitoring appearance of microorganisms, preferably fungi using photographic imaging and visual inspection of photographs and bakery products. MFSL is determined as time in hours between inoculation of a bakery product with the micro-organism to be assessed, until spoilage of the bakery product becomes visible by eye, e.g., due to forming of colonies of a fungus.

A bakery product according to the invention typically has a MFSL of at most 336 h, preferably at most 312 h, more preferably at most 288 h, at most 264 h, at most 240 h, at most 216 h, most preferably at most 192 h, as determinable with an ASLT as described in Example 1. Preferably, the MFSL is between about 50 hours and about 250 h, between about 60 h and about 200 h, between about 90 h and about 150 h, between about 100 h and about 120 h.

The invention further relates to the use of chitosan as an antimicrobial agent against *P. paneum.*

The invention further relates to the use of a combination of chitosan and FWF as natural preservative in a bakery product.

For the purpose of clarity and a concise description, features are described herein as part of the same or separate embodiments, however, it will be appreciated that the scope of the invention may include embodiments having combinations of all or some of the features described.

The invention is demonstrated by the following examples.

### Examples

**Example 1: Antimicrobial impact of chitosan with different MW and DDA in bread**

Breads were made by mixing the dough ingredients from Table 1. The wt.% for several ingredients are given based on flour weight (Flour Weight Based, FWB). For the prepared recipes the difference with total dry weight is insubstantial. The following breads were prepared: a control without any preservatives, a reference containing 0.3% flour weight based (FWB) calcium propionate (CalPro), and a bread containing 1% chitosan (KitoZyme, Belgium) with number average MW of 15 kDa and degree of deacetylation (DDA) of 70%. The chitosan sample was obtained from cell wall of *A. niger* (KitoZyme, Belgium). Ingredients were mixed using a spiral mixer for 10 minutes. Afterwards the dough for each trial was divided into three pieces of 520 g, rounded manually, and placed into bread tins. The dough pieces were placed in a proofing cabinet to rise at 40 °C and 80% relative humidity until they reach similar height (fermentation time between 60-70 min). The breads were baked for 22 minutes in a deck oven at 260 (bottom) and 230 (top) °C.

**[Table 1] Bread recipes**

| Ingredients | % Flour weight based | | |
|---|---|---|---|
| | Control | CalPro | Chitosan |
| Flour | 100 | 100 | 100 |
| Water | 58 | 58 | 58 |
| Block yeast | 3.75 | 3.75 | 3.75 |
| Salt | 1.5 | 1.5 | 1.5 |
| Sugar | 1 | 1 | 1 |
| Gluten | 1 | 1 | 1 |
| Ascorbic acid | 0.005 | 0.005 | 0.005 |
| Fungal amylase | 0.02 | 0.02 | 0.02 |
| Xylanase | 0.002 | 0.002 | 0.002 |
| CalPro | - | 0.3 | - |
| Chitosan (MW 15 kDa, DDA 70%) | - | - | 1 |

Following baking, the breads were cooled in a HEPA-filtered chamber for 90 min. One bread was used for pH measurement and two breads were subjected to ASLT.

To measure the pH of the bread, 10 g bread was placed into 90 ml water (10% w/v) and suspended using a blender. The pH of the resulting bread suspension was measured with a calibrated portable pH meter (Accumet AB150, Fischer Scientific).

To perform ASLT, the remaining two breads were sliced to 13 mm slices. The crumb (inner part of breads) of three random slices from each bread were cut out using a cookie cutter (3.2 cm diameter) and placed in sterile 6-well plates (2x breads x 3 slices). Two 6-well plates were prepared per bread type. Each bread piece in a 6-well plate was inoculated with 3 aliquots of ±500 spores (20 pL) of either *A. niger* or *P. paneum.* Therefore, 18 spots of each mould were inoculated per trial (6 bread piece × 3 aliquots). Freeze-dried spores were used in all experiments. The inoculated breads incubated at room temperature of around 21 °C until visible mould appearance. The appearance of the moulds was imaged by taking photographs. The images were inspected visually, and the TOA was defined as mould appearance in hours after mould inoculation.

To study microbial activity of chitosan samples with different MW and DDA, three different chitosans obtained from *A. niger* with high MW and different DDA were purchased from ChiBio (China):
1) 281 kDa and 85% DDA
2) 267 kDa and 90% DDA
3) 274 kDa and 95% DDA

Due to limited availability of the high MW chitosan samples, ASLT was performed at small scale in bread rolls. To this end, two different doughs were prepared: without any preservatives and with the high MW chitosan samples dosed at 0.9% (due to limited availability of samples). A bread dough was made by mixing the dough ingredients from Table 1 together for 5 minutes using a DoughLAB mixer (PerkinElmer). The dough was placed in a proofing cabinet at 40 °C with no humidity for 70 min. Dough was divided (8 × 50 g), rounded, placed in aluminum cups (10 cm diameter) and baked at 200 °C for 15 min. Of the obtained breads, six breads were used for preparation of two 6-well plates for the ASLT, and one used for pH measurement. 6-well plates were prepared and ASLT was performed as outlined above. The results are shown in Figure 1.

Inoculation of the control breads without any preservatives with ±500 spores of *A*. *niger* or *P. paneum* led to TOA of 50±1.2 and 70±1.8 hours respectively (Figure 1A). CalPro (0.3% FWB) increased TOA of *A. niger* or *P. paneum* 80% and 17% respectively compared to respective control bread without preservatives (Figure 1A). Addition of chitosan (1% FWB) increased the pH of bread to 6.45 but did not lead to profound increased TOA of *A. niger* compared to control test (13% extra TOA). In contrast, *P. paneum* was more sensitive to chitosan and the TOA was increased 29% compared to the tests (Figure 1B). Interestingly, the high MW chitosan samples (267-281 kDa, 85-95% DDA) showed similar antimicrobial activity against *P. paneum* (18-26%- increased TOA compared to control without preservative) (Figure 1B) but not much against *A. niger* (Figure 1A). The pH of the bread samples with the high MW chitosan samples raised to 6.4 (Figure 1 A-B). These results are in line with the results of the low MW chitosan sample obtained from the other provider (KitoZyme, 70% DDA, MW 15 kDa) that resulted in 29% increased TOA against *P. paneum,* and pH of bread reached to 6.45 (Figure 1) (note that low MW chitosan was dosed at 1% FWB whereas high MW chitosan samples were dosed at 0.9% FWB). Independent of the chitosan source, provider, the applied bread type (tin bread vs bread rolls), it can be derived form Example 1 that TOA *of P. paneum* can be prolonged with chitosan molecules with an MW in the range of 15 kDa to 281 kDa and DDA in the range of 70-95%.

Interestingly, breads containing chitosan (MW 15 kDa, 70% DDA) showed more restricted growth compared to control breads without preservative but also compared to breads with CalPro (0.3 FWB, Figure 1C, image obtained after 7 days of inoculation). Therefore, chitosan added to breads at 1% FWB was more effective in reducing growth of *P. paneum* compared to CalPro added at 0.3% FWB. In contrast, CalPro was more effective against *A. niger.*

### Example 2: Chitosan in combination with CalPro or fermented wheat flour

As can be derived from Example 1, chitosan is more effective in reducing growth of *P. paneum* but less effective against *A. niger.* In contrast, CalPro is more effective against *A. niger* but less active against *P. paneum.* Therefore, combination of chitosan with CalPro may offer an effective control method against both *A. niger* and *P. paneum* that are the most common and problematic spoilage microorganisms in bakery products. Alternatively, cultured flour known as fermented wheat flour (FWF) can also be used instead of CalPro for clean label purposes. FWF is wheat flour fermented with microbes of the genera *Propionibacteria* (e.g., *Propionibacterium freudenreichii* and *P. acidipropionici*). This fermentation produces natural organic acids mainly consisting of propionic acid neutralized with calcium hydroxide to form natural calcium salts of the organic acids including CalPro.

Surprisingly, addition of combination of CalPro (0.3% FWB) and chitosan (1% FWB) led to 29% extra TOA compared to additive impact of CalPro (0.3% FWB) and chitosan (1% FWB) as compared to control breads without preservative (Figure 2A). This increase in TOA was achieved despite an increase in bread pH to 6.15. At higher pH, the fraction of undissociated acids of weak organic acids (typically having a pKa value in the range of about 3 to 5) which are associated with an antimicrobial effect is relatively low. The increase in TOA of *A. niger* is more than individual effects of CalPro and chitosan, indicating a synergistic effect between CalPro and chitosan (Figure 2A). In contrast, the combination of CalPro (0.3% FWB) and chitosan (1% FWB) was not better than chitosan (1% FWB) alone in suppressing growth of *P*. *paneum.* Interestingly, when CalPro was replaced by FWF (Upgrade WS from Kerry) at equal propionate level (CalPro 0.3% = FWF 0.78%, note that this ratio can be changed according to propionic acid content of a given FWF), it similarly showed synergistic interactions against *A*. *niger* (Figure 2 B). Surprisingly, addition of 0.25% or 0.5% chitosan to 0.78% FWF (equal to 0.3% CalPro) in mixing bowl before baking not only did not improve its activity against *A. niger* beyond FWF alone but also it had an adverse effect on the antimicrobial effect of FWF (Figure 3). This cannot be due to pH increase in presence of chitosan as the highest pH among FWF and chitosan combination (6.5) was noted when 1% chitosan was added to FWF (Figure 3).

### Example 3: Chitosan in combination with buffered vinegar

To test if chitosan shows synergy with salts of other weak organic acids, combination of chitosan with an acetic acid-based preservative, calcium acetate known as buffered vinegar, was tested. In line with the experiments with FWF (Figure 3), addition of 0.5% FWB chitosan did not lead to synergy against *A. niger* independent of the concentration of buffered vinegar (1 or 2% FWB) (Figure 4A). However, when the concentration of chitosan was increased to 1% FWB, the combination of chitosan with buffered vinegar indeed showed synergy against *A. niger* and increased TOA 3-10% relative to the additive impact of chitosan (1 % FWB) and buffered vinegar (1-2% FWB) as compared to control breads without preservative (Figure 4A). This indicates concentration-dependent synergistic interaction of chitosan with salts of different weak organic acids in controlling growth of *A. niger.* In line with the experiments with CalPro and FWF (Figure 2), no synergy was noted against *P*. *paneum* (Figure 4B).

### Example 4: Chitosan impact on baker's yeast

One important criterion in selection of a preservative to be added to the mixing bowl before baking bread is the impact on baker's yeast. If the compound has high antimicrobial activity against baker's yeast, a higher amount of yeast needs to be added to compensate for the activity loss which is not economically attractive. Hence, the applied antimicrobial compounds should have minimal impact on baker's yeast. Impact of chitosan on baker's yeast was assessed using an Activigraph MK2 that records volume of gas produced (CO₂ released from yeast fermentation) in a fermenting bread dough system by sensing and interpreting gas pressure. To this end, three different doughs were prepared without any preservatives, with CalPro (0.3% FWB) as the reference and with 0.5, 1, and 2% FWB chitosan (KitoZyme) as outlined above. From each dough, 2 pieces of 100 g dough were placed in a separate Activigraph jar pre-warmed to 30 °C, closed tightly and connected the tubes to the appropriate nozzles. Data was captured as cumulative CO₂ production after 1, 2, and 4 hours per trial. Interestingly, after 1 hour of fermentation, chitosan at 1% FWB showed higher CO₂ production compared to CalPro at 0.3 % FWB (Figure 5). Prolonged incubation led to more negative impact of chitosan, however, yeast fermentation during bread baking usually lasts for 70 minutes. It can be concluded that 1% chitosan does not exhibit pronounced antimicrobial activity against baker's yeast under typical baking conditions.

### Example 5: Chitosan enzymatic hydrolysis

For enzymatic hydrolysis, the high MW chitosans from Example 1 (281 kDa and 85% DDA, 267 kDa and 90% DDA, 274 kDa and 95% DDA) were used. The chitosan samples were individually dissolved in 50 mM Na-acetate solution with pH 5.5 (to reach final chitosan concentration of 3% w/v) and incubated overnight in an oven at 50°C. The overnight incubation resulted in an increase of the pH to above 8 due to alkaline nature of chitosan samples. To decrease the pH of the solution containing chitosan samples to 5.5, acetic acid was gradually added until pH to 5.5 was achieved. This led to final (Na)-acetate concentration of 150 mM in chitosan solutions. 1.2 L chitosan solutions (3% w/v) were enzymatically hydrolyzed using 0.25% (w/v) Celluclast enzyme (Novozymes). Subsamples were taken after 0.5, 1, 2, and 6 hours and heated to 100 °C to deactivate the enzyme. The average MW of the chitosan fragments was analysed using Gel Permeation Chromatography (GPC) equipped with a Refractive Index Detection (RID) detector (Shimadzu, Tokyo, Japan). Separation of chitosan fragments was achieved with three (8 mm × 300 mm) PSS Novema Max medium (P/N 212-0002) columns connected in series with a PSS Novema Max guard column (6.0 mm × 400 mm). Samples (100 pL) were eluted isocratically with a solution of 0.1M sodium chloride (NaCl) and 0.1% Trifluoroacetic acid (TFA) as mobile phase at a flow rate of 0.9 mL/min for 60 min at 40°C. The average MW of the fragments was calculated against a standard series of dextran molecules with known sizes.

Hydrolysis after 0.5, 1, 2, and 6 hours led to production of fragments with MW of *ca.* 44, 32, 22, and 11 kDa, respectively (Table 2). The identical size profiles of the three samples with three different DDA shows that the DDA does not interfere with the enzymatic hydrolysis. The samples were freeze-dried for 48 hours and were used as preservatives in breads. Due to limited availability of the hydrolyzed samples, ASLT was performed at small scale in bread rolls. To this end, four different doughs were prepared without any preservatives, with the original high MW chitosan samples (solids, not in solvent not hydrolyzed) at 0.9% FWB as the reference, with hydrolyzed chitosan samples at 1.17% FWB (0.9% chitosan, 0.28% solvent) (Table 2), and with freeze-dried solvent alone at 0.217% FWB to test the impact of the applied solvent on antimicrobial activity. Bread rolls were prepared as outlined in Example 1. Further, the three original high MW chitosan samples dissolved in solvent but not hydrolyzed were also freeze-dried and tested for antimicrobial impact in ASLT.

**[Table 2] Number average MW of the chitosan fragment after different hydrolysis time.**

| | **Time of hydrolysis** | | | |
|---|---|---|---|---|
| **High MW chitosan** | **0.5 h** | **1 h** | **2 h** | **6 h** |
| 85% DDA 281 kDa | 44 kDa | 33 kDa | 22 kDa | 12 kDa |
| 90% DDA 267 kDa | 44 kDa | 34 kDa | 22 kDa | 12 kDa |
| 95% DDA 274 kDa | 46 kDa | 34 kDa | 22 kDa | 11 kDa |

Antimicrobial activity was also observed with all the hydrolyzed chitosan samples (Figure 6 A-F & E) whereas no substantial antimicrobial activity was noted when freeze-dried solvent was added to the breads (Figure 6 F & H). In line with Example 1, the results showed that TOA of *P. paneum* can be prolonged with chitosan molecules with an MW in the range of 11 kDa to 281 kDa and DDA in the range of 70-95%.

Further, to test a dose-response relationship between the hydrolyzed chitosan samples and TOA, one of the hydrolysed chitosan samples (44 KDa, 90% DDA; dissolved in solvent and hydrolyzed) was applied at 0.5 (0.34% chitosan, 0.16% solvent), 1 (0.69% chitosan, 0.31% solvent), 1.5 (1.03 % chitosan, 0.47% solvent) and 2% (1.38 % chitosan, 0.62% solvent) FWB and ASLT was performed as outlined. This indeed showed that increasing chitosan concentration leads to a gradual increase in TOA of both *A. niger* (Figure 7A) and *P. paneum* (Figure 7B). The pH of bread remained at 5.7 as the starting chitosan samples used all had similar pH of approximately 5.5.

Another notable outcome of these experiments was restriction of *P. paneum* growth on breads containing hydrolyzed chitosan samples compared to bread containing the untreated high MW solid chitosan (Figure 8). Interestingly, when the high MW chitosan samples were dispersed in acetate solvent pH 5.5 (150 mM), not hydrolyzed, and freeze-dried prior to inclusion in the dough, it increased TOA *of P. paneum* (23-32% compared to control without preservative, Figure 6 C, D & G) and highly restricted growth of *P. paneum* (Figure 8) in line with the hydrolyzed samples (Figure 6 C, D & G).

These results indicate that antimicrobial activity of chitosan may be enhanced when applied in dispersed form. To test if the observed antimicrobial activity in presence of chitosan was due to reduced pH, experiments were performed where two types of acidulants (citric acid and acetic acid) were added with chitosan (15 KDa, 70% DDA from KitoZyme) in the mixing bowl before baking the bread samples and performing ASLT. The results showed that including acidulants together with chitosan indeed reduced bread pH, but this also led to deteriorated antimicrobial activity (Figure 9). These results underpin that rather than a lower pH in bread matrix, dispersed chitosan in a (Na)-acetate solvent before mixing in bowl increases its antimicrobial activity in bread.

### Example 6: Chitosan encapsulation

Breads were prepared according to Example 1, using free low MW chitosan (15 kDa, 70% DDA), or encapsulated form of chitosan (MW 15 kDa, 70% DDA) in different encapsulation matrixes including hydrogenated rapeseed oil, segregated palm, and glycerol monostearate. The encapsulated chitosan contained 30 wt% chitosan (and 70 wt% fat) and hence was dosed at 3% FWB to match 0.9% FWB of free chitosan. In line with Example 1 (Figure 1), encapsulated chitosan samples were more effective against *P. paneum* than *A. niger* (Figure 10A). Using encapsulated chitosan in rapeseed oil, the experiments were repeated in presence of citric acid (0.14 or 0.28% FWB) as an acidulant (Figure 10). Encapsulation improved antimicrobial activity in low pH (Figure 10B). This indicates that encapsulating chitosan in a fat having a melting point of more than 40 °C, antimicrobial properties of chitosan in low pH bread could be improved.

## Claims

1. A bakery product comprising an organic acid having a pKa of 4 or more, or a salt thereof, and chitosan.

2. The bakery product according to claim 1, wherein said chitosan is present in an amount, based on the total dry weight, of at least 0.5 wt.%, preferably in the range of 0.65-2 wt.%, more preferably in the range of 0.8-1.5 wt.%.

3. The bakery product according to any one of the preceding claims, wherein said chitosan has one or more of the following properties:
a) a molecular weight (MW) of at least 11 kDa, preferably at least 15 kDa;
b) a MW of at most 285 kDa, more preferably at most 200 kDa, at most 150 kDa, in particular at most 100 kDa;
c) a degree of deacetylation of at least 70%.

4. The bakery product according to any one of the preceding claims, wherein said organic acid or salt thereof is selected from acetic acid, propionic acid, sorbic acid and benzoic acids and salts of any of these, more preferably selected from acetic acid, salts of acetic acid, propionic acid and salts of propionic acid.

5. The bakery product according to any one of the preceding claims, wherein said organic acid or salt thereof is provided by fermented carbohydrates, preferably fermented wheat flour (FWF), more preferably wherein said fermented carbohydrates, preferably fermented wheat flour, has been produced by fermenting wheat flour with a bacterium from the genus *Propionibacterium,* preferably *P*. *freudenreichii.*

6. The bakery product according to any one of the preceding claims, wherein said organic acid or salt thereof is present in an amount, based on the total dry weight, of at least 0.05 wt.%. preferably of 0.15-1 wt.%.

7. The bakery product according to any one of the preceding claims, wherein said bakery product has a pH of at least 5.5, preferably at least 6, as determinable with the method described in Example 1.

8. The bakery product according to any one of the preceding claims, wherein said bakery product is selected from breads, such as loaf breads, bagels, buns, rolls, croissants, baguettes, pretzels, brioches, crumpets and flatbreads; dessert cakes, such as pound cakes, sponge cakes, chiffon cakes, genoise cakes, cake muffins, brownies, cheesecakes, and angel cakes; pastries, pies, cookies flour tortillas and pizza's, preferably wherein said bakery product is a bread, more preferably a loaf bread.

9. The bakery product according to any one of the preceding claims, wherein time of appearance (TOA) of *A. niger* and/or *P. paneum* is at least 50 h, preferably at least 60 h, more preferably at least 90 h, in particular at least 100 h as determinable with an accelerated shelf-life testing as described in Example 1.

10. Clean label natural preservative for preserving a bakery product comprising a fermented carbohydrate, preferably fermented wheat flour, and chitosan.

11. A dough or pre-mix for preparing a bakery product comprising an organic acid having a pKa of 4 or more, or a salt thereof and chitosan.

12. A method for preparing a bakery product comprising providing a dough comprising an organic acid having a pKa of 4 or more, or a salt thereof, and chitosan, shaping the dough and baking the shaped dough to obtain a bakery product.

13. The method according to claim 12, wherein said dough has been prepared by
(i) preparing a fluid mixture comprising chitosan and an aqueous medium;
(ii) optionally removing a liquid fraction of said fluid mixture to obtain a solid fraction comprising chitosan;
(iii) mixing said fluid mixture from step (i) or said solid fraction comprising chitosan from step (ii) with one or more dough ingredients to obtain a dough.

14. The method according to claim 12 or 13, wherein said chitosan is at least partly coated with a coating material, wherein said coating material is at least substantially solid at dough temperature and wherein said coating material is meltable during baking, preferably wherein said coating comprises rapeseed oil.

15. Use of chitosan as an antimicrobial agent against *P. paneum,* preferably in a bakery product.

16. Use of a combination of chitosan and a fermented carbohydrate, preferably fermented starch, more preferably fermented wheat flour, as natural preservative in a bakery product.
